# EUROPÄISCHE PATENTSCHRIFT

(11) **EP 2 712 847 B1**
(45) Veröffentlichungstag und Bekanntmachung des Hinweises auf die Patenterteilung: **16.12.2015**
(21) Anmeldenummer: 13004665.9
(22) Anmeldetag: 25.09.2013
(51) Int. Cl.: C03B 7/08, C03B 7/12

(54) **PORTIONIER-VORRICHTUNG UND -SYSTEM UND VERFAHREN ZUM PORTIONIEREN VON SCHMELZFLÜSSIGEM GLAS**
DEVICE, SYSTEM AND METHODS FOR PARTING MOLTEN GLASS
DISPOSITIF, SYSTÈME ET MÉTHODES DE PARTITIONNEMENT POUR DU VERRE EN FUSION

(30) Priorität: 28.09.2012 DE 102012019258
(43) Veröffentlichungstag der Anmeldung: 02.04.2014
(73) Patentinhaber: Zwiesel Kristallglas AG, 94227 Zwiesel (DE)
(72) Erfinder: Lesche, Klaus, 94259 Kirchberg im Wald (DE)
(74) Vertreter: Müller-Boré & Partner Patentanwälte PartG mbB

(56) Entgegenhaltungen:
- FR-A1- 2 485 213
- US-A- 1 853 003
- US-A- 5 728 191

## Beschreibung

Die vorliegende Erfindung betrifft Portioniervorrichtungen für schmelzflüssiges Glas, ein Portioniersystem und Verfahren zum Betreiben der Portioniervorrichtungen.

Aus dem Stand der Technik sind Strangspeiser und Tropfenspeiser als Portioniervorrichtungen für schmelzflüssiges Glas bekannt.

In der Offenlegungsschrift DE 10 2008 005 931 A1 wird beispielsweise ein Tropfenspeiser offenbart, der über eine horizontale Rinne aus einem Vorratsbehälter mit schmelzflüssigem Glas beschickt wird. Der Tropfenspeiser weist einen Schüsselhals auf, in dessen unterem Ende eine Auslassöffnung angeordnet ist. Ferner befindet sich ein Plunger in dem unteren Bereich des Schüsselhalses. Der Plunger ist dabei innerhalb des Schüsselhalses nach oben und unten sowie in beide Drehrichtungen antreibbar. Eine derartige Bewegung des Plungers dient dazu, den Glasdurchsatz durch einen Spalt zwischen dem Schüsselhals und dem Plunger festzulegen. Bei einer Abwärtsbewegung des Plungers wird eine entsprechende Menge des schmelzflüssigen Glases über die Auslassöffnung ausgetrieben, wobei sich an der Auslassöffnung ein Tropfen bildet. Der Tropfen wird anschließend mit einer Trennschere abgetrennt. Der damit bereitgestellte Glasposten kann dann einer weiterverarbeitenden Maschine zugeführt werden.

Tropfenspeiser bieten die Möglichkeit, durch eine Variation in der Bewegungsgeschwindigkeit des Plungers sowie durch eine Variation der Spaltgröße zwischen dem Schüsselhals und dem Plunger die ausgestossene Menge eines Glastropfens bzw. Glaspostens zu beeinflussen. Eine Variation ist jedoch nur in einem bestimmten Umfang möglich, so dass besonders kleine Menge eines Glaspostens nicht mehr problemlos mit einem Tropfenspeiser bereitgestellt werden kann.

In der Vergangenheit wurde hier zunächst versucht, den Spalt zwischen dem Schüsselhals und dem Plunger möglichst klein zu gestalten und die Glasviskosität durch Reduzierung der Glastemperatur zu erhöhen, um die Ausströmgeschwindigkeit des Glases aus der Auslassöffnung zu verringern. Dies hatte jedoch zur Folge, dass die Glasschmelze bei Abkühlung sehr zäh wurde, so dass die Glasposten in den weiterverarbeitenden Maschinen nur noch mit Qualitätseinbußen verarbeitet werden konnten.

Die DE 10 2008 005 931 A1 schlägt stattdessen vor, die Form des Plungers zu verändern. Im Speziellen soll die axiale Erstreckung eines den Strömungsspalt bestimmende Mittelbereich des Plungers kleiner sein als der Radius der Schüsselhalsbohrung. Der Mittelbereich ist dabei von einem sich in Strömungsrichtung des Glases konisch erweiternden Anströmbereich und einem sich im Durchmesser verringernden Abströmbereich umgeben.

Jedoch weist die DE 10 2008 005 931 A1 weiterhin darauf hin, dass bei einer besonders langsamen Arbeitsgeschwindigkeit zur Herstellung eines Glaspostens mit besonders geringer Menge, eine beheizte Auslassöffnung erforderlich ist, so dass ein Abkühlen des schmelzflüssigen Glas in diesem Bereich verhindert wird und die Glastemperatur innerhalb des Glaspostens weitgehend konstant bleibt.

Ferner offenbart die FR 2 485 213 A eine Verteilungsvorrichtung für schmelzflüssiges Glas. Die Vorrichtung weist einen oberen Durchgang und einen unteren Durchgang auf, die versetzt zueinander mit einem Körper verbunden sind. Über den oberen Durchgang gelangt schmelzflüssiges Glas aus einem Reservoir in eine Kammer in dem Körper, wobei die Kammer durch Kolben in seitlicher Richtung begrenzt ist. In einer ersten Position der Kolben kann schmelzflüssiges Glas aus dem Reservoir in die Kammer einströmen, wird jedoch am Austritt aus dem unteren Durchgang gehindert, da dieser einem der Kolben blockiert ist. Ist die Kammer gefüllt, bewegen sich die Kolben in Richtung des unteren Ausgangs, um ein Ausströmen des schmelzflüssigen Glases zu ermöglichen. Sobald die Kolben in dieser Position angelangt sind, wird das Volumen der Kammer reduziert, um das schmelzflüssige Glas aus der Kammer auszupressen.

Es ist daher die Aufgabe der vorliegenden Erfindung eine verbesserte Portioniervorrichtung für schmelzflüssiges Glas bereitzustellen, die es ermöglicht, besonders kleine Glasposten herzustellen, die sich ohne Qualitätsverluste weiterverarbeiten lassen.

Diese Aufgabe wird, gemäß einem Aspekt, durch eine Portioniervorrichtung für schmelzflüssiges Glas gelöst, wobei die Portioniervorrichtung umfasst:
- einen einlassseitigen Rohrabschnitt, welcher an einem ersten Ende an einem Glasreservoir fixierbar ist, aus welchem die Portioniervorrichtung mit schmelzflüssigem Glas speisbar ist;
- zumindest einen volumenvariablen Abschnitt, welcher mit einem zweiten Ende des einlassseitigen Rohrabschnitts verbunden ist und dessen Innenvolumen variabel ist; und
- einen auslassseitigen Rohrabschnitt, der an einem ersten Ende mit dem zumindest einen volumenvariablen Abschnitt verbunden ist und an dessen zweitem Ende eine Auslassöffnung angeordnet ist, durch welche eine vordefinierte Menge des schmelzflüssigen Glases austreten kann,
wobei der einlassseitige Rohrabschnitt, der zumindest eine volumenvariable Abschnitt und der auslassseitige Rohrabschnitt einen Durchflusskanal für das schmelzflüssige Glas ausbilden, und
wobei der zumindest eine volumenvariable Abschnitt ein Balg ist.

Gemäß der vorliegenden Anmeldung werden der einlassseitige Rohrabschnitt sowie der auslassseitige Rohrabschnitt vorzugsweise als zylindrische Hohlkörper ausgebildet, wobei der Innendurchmesser der genannten Rohrabschnitte vorzugsweise zwischen 2 und 14 mm und am meisten bevorzugt zwischen 6 und 8 mm ist. Die Innendurchmesser des einlassseitigen Rohrabschnitts und des auslassseitigen Rohrabschnitts können dabei übereinstimmen als auch voneinander abweichen.

Der volumenvariable Abschnitt ist zwischen dem einlassseitigen Rohrabschnitt und dem auslassseitigen Rohrabschnitt angeordnet und mit diesen verbunden. Der einlassseitige und auslassseitige Rohrabschnitt weist dabei eine Länge von vorzugsweise 20 bis 40 mm und am meisten bevorzugt eine Länge von 20 bis 30 mm auf, wobei die Längen der Rohrabschnitte voneinander abweichen können. Bevorzugterweise werden die einzelnen Bauteile der Portioniervorrichtung mittels Schweißen verbunden. Im Gegensatz zu dem einlassseitigen und auslassseitigen Rohrabschnitt, die ein unveränderliches Volumen aufweisen, ist der volumenvariable Abschnitt derart ausgestaltet, dass das Volumen innerhalb des volumenvariablen Abschnitts variabel ist.

Weiterhin kann die Auslassöffnung in ihrem Durchmesser unterschiedliche Größen aufweisen. Insbesondere kann die Auslassöffnung einen Durchmesser aufweisen, der dem Innendurchmesser des auslassseitigen Rohrabschnitts entspricht oder der kleiner ist als der genannte Innendurchmesser. Eine Variation der Größe der Auslassöffnung beeinflusst die jeweilige Portionsmenge des schmelzflüssigen Glases, die aus der Auslassöffnung austritt. Eine Portionsmenge wird im Folgenden entweder "Tropfen" oder "Glasposten" genannt.

Die vorliegende Erfindung bietet den Vorteil, dass in einfacher Weise, die Größe eines Glaspostens gesteuert werden kann, wobei auch sehr kleine Größen möglich sind. Hierbei werden unter kleinen Größen Glasmengen von kleiner als 20 g verstanden. Die aus der Auslassöffnung ausgestoßene Glaspostenmenge wird in der erfindungsgemäßen Portioniervorrichtung insbesondere durch das Volumen des volumenvariablen Abschnitts beeinflusst, wobei dieser später im Detail bezüglich eines Verfahrens zum Portionieren erläutert wird.

Während des Portionierungsverfahrens bewegt sich der volumenvariable Abschnitt vorzugsweise zwischen einer Position, in der sein Volumen minimal ist, und einer Position, in der sein Volumen vergrößert ist im Vergleich zu der Position, in der sein Volumen minimal ist. Die Volumenvergrößerung kann dabei zwischen einer leichten Volumenvergrößerung und einer maximalen Volumenvergrößerung, die aufgrund der Bauweise des volumenvariablen Abschnitts möglich ist, variieren. Vorzugsweise variiert hierbei die Länge eines volumenvariablen Abschnitts zwischen einer Länge von 30 bis 60 mm. Die Volumenvergrößerung bewirkt dabei, dass schmelzflüssiges Glas aufgrund einer Sogwirkung aus einem angeschlossenen Glasreservoir in die Portioniervorrichtung nachgezogen wird. Die Stärke des Nachziehens wird dabei durch das Ausmaß der Volumenvergrößerung des volumenvariablen Abschnitts beeinflusst. Sobald sich der volumenvariable Abschnitt wieder in eine Position zurückbewegt, in der sein Volumen vorzugsweise minimal ist, wird eine bestimmte Glaspostenmenge aus der Auslassöffnung ausgestoßen. Die Volumenverkleinerung entspricht dabei einem Pumphub. Die ausgestoßene Glaspostenmenge bildet außerhalb des auslassseitigen Rohrabschnitts an der Auslassöffnung einen Tropfen, der sich entweder aufgrund der Schwerkraft selbst von der Portioniervorrichtung trennt oder mittels einer Trennschere von der Portioniervorrichtung getrennt wird.

Die erfindungsgemäße Portioniervorrichtung bietet somit mittels eines Teilabschnitts des Durchflusskanals, der sein Volumen verändern kann, einen Ausstoßmechanismus, der es ermöglicht, selbst mit einer kleinen Volumenveränderung sehr kleine Glaspostenmengen auszustoßen. Wird die Volumenveränderung vergrößert, ist es möglich auch größere Glaspostenmengen auszustoßen bzw. zu portionieren. Es ist dabei nicht erforderlich die Portioniervorrichtung konstruktiv zu verändern. Es ist lediglich notwendig, die Steuerung der Volumenvergrößerung bzw. anschließenden Volumenverkleinerung einzustellen. Insbesondere ist es bei der Herstellung von sehr kleinen Glasposten nicht erforderlich, die Viskosität des schmelzflüssigen Glases zu erhöhen, wodurch eine gute Weiterverarbeitung der Glasposten gewährleistet wird.

Vorzugsweise besteht der Balg aus zumindest einem diskusförmigen Balgelement, wobei sich das diskusförmige Balgelement rotationssymmetrisch um eine Rotationsachse des einlassseitigen Rohrabschnitts und/oder des auslassseitigen Rohrabschnitts erstreckt. Das diskusförmige Balgelement weist dabei vorzugsweise einen inneren Ausschnitt auf, der einen Durchmesser aufweist, der dem Innendurchmesser des einlassseitigen und/oder auslassseitigen Rohrabschnitts entspricht oder größer ist als der Innendurchmesser des einlassseitigen und/oder auslassseitigen Rohrabschnitts, wobei die Diskusform des Balgemements durch zwei rotationssymmetrische Flächen gebildet wird, die derart zueinander angeordnet sind, dass jeweilige äußere Enden der rotationssymmetrischen Flächen miteinander verbunden sind und einen Winkel zueinander bilden, und jeweilige innere Enden der rotationssymmetrischen Flächen mit dem zweiten Ende des einlassseitigen Rohrabschnitts, mit einem inneren Ende eines angrenzenden zweiten Balgemements oder mit dem ersten Ende des auslassseitigen Rohrabschnitts verbunden sind.

Der Winkel, der durch die beiden rotationssymmetrischen Flächen gebildet wird, variiert dabei je nach gewünschter Volumengröße des volumenvariablen Abschnitts. Die Verbindung zweier rotationssymmetrischer Flächen eines Balgelements erfolgt vorzugsweise durch Schweißen.

Der volumenvariable Abschnitt kann durch ein Balgelement oder eine Vielzahl von Balgelementen ausgebildet sein. Eine Vielzahl von Balgelementen bietet jedoch den Vorteil eines größeren Rahmens der Volumenvergrößerung bzw. Volumenverkleinerung, wodurch die Größe der ausgestoßenen Glaspostenmenge stärker variiert werden kann.

Weiterhin ist es bevorzugt, dass ein Abstand zwischen zumindest einer rotationssymmetrischen Fläche eines Balgelements und einer Ebene senkrecht zu der Rotationsachse des einlassseitigen und auslassseitigen Rohrabschnitts und des volumenvariablen Abschnitts nicht kontinuierlich von dem inneren Ende der rotationssymmtrischen Fläche zu dem äußeren Ende der rotationssymmetrischen Fläche abnimmt, wobei die Ebene senkrecht zu der Rotationsachse einen Verbindungspunkt, an welchem die rotationssymmetrischen Flächen eines Balgelements miteinander verbunden sind, schneidet. Die Wandstärke der rotationssymmetrischen Fläche weist dabei vorzugsweise eine konstante Dicke auf. Die damit erzielte zusätzliche Flächengröße der rotationssymmetrischen Fläche bietet bei einer Volumenvergrößerung des volumenvariablen Abschnitts, insbesondere bei einer maximalen Volumenvergrößerung, eine zusätzliche Flexibilität, so dass Beschädigungen an der Portioniervorrichtung vermieden werden können.

Vorzugsweise ist die Portioniervorrichtung aus Platin oder einer Platinlegierung hergestellt.

Das zu portionierende schmelzflüssige Glas, das durch den Durchflusskanal fließt, weist eine Temperatur von vorzugsweise 1100°C bis 1350°C auf. Platin weist hierzu eine hohe Formbeständigkeit auf, so dass die sehr hohen Temperaturen des schmelzflüssigen Glas keine Formveränderungen an der Portioniervorrichtung hervorrufen. Platin ist zudem korrosionsbeständig, wodurch eine besondere Langlebigkeit der Vorrichtung gewährleistet werden kann. Als Platinlegierungen eignen sich für die vorliegende Anwendung insbesondere Platinlegierungen mit einem Rhodiumanteil von vorzugsweise bis zu 30%. Im Speziellen werden vorzugsweise folgende Platinlegierungen verwendet: Legierung aus 95% Platin und 5% Rhodium (Pt5Rh), Legierung aus 90% Platin und 10% Rhodium (Pt10Rh), Legierung aus 80% Platin und 20% Rhodium (Pt20Rh) oder Legierung aus 70% Platin und 30% Rhodium (Pt30Rh).

In einer bevorzugten Ausführungsform umfasst die Portioniervorrichtung zwei volumenvariable Abschnitte, wobei der erste volumenvariable Abschnitt mit dem zweiten Ende des einlassseitigen Rohrabschnitts verbunden ist, die beiden volumenvariablen Abschnitte mittels eines Zwischenrohrabschnitts verbunden sind, und der auslassseitige Rohrabschnitt an seinem ersten Ende mit dem zweiten volumenvariablen Abschnitt verbunden ist.

Eine derartige Ausführungsform bietet den Vorteil, dass mithilfe des ersten volumenvariablen Abschnitts, der mit dem einlassseitigen Rohrabschnitt verbunden ist, der Nachfluss des schmelzflüssiges Glases, das später aus der Auslassöffnung ausgestoßen werden soll, verbessert reguliert werden kann. Verkleinert sich das Volumen des ersten volumenvariablen Abschnitts, wird schmelzflüssiges Glas in der Portioniervorrichtung voran gepumpt. Die Geschwindigkeit der Volumenverkleinerung sowie die Größe der Volumenverkleinerung beeinflussen dabei die Geschwindigkeit sowie die Menge des Nachflusses. Vergrößert sich das Volumen des ersten volumenvariablen Abschnitts, entsteht eine zumindest bereichsweise Sogwirkung, so dass schmelzflüssiges Glas aus dem Glasreservoir nachgezogen wird. Vorzugsweise wird weiterhin zumindest ein Teil des schmelzflüssiges Glas, das sich zumindest in dem Bereich des Zwischenrohrabschnitts befindet, zurück in Richtung des ersten volumenvariablen Abschnitts gezogen wird. Ein derartiger Rückzug bewirkt, dass nachfließendes schmelzflüssiges Glas nicht die Pumpwirkung des zweiten volumenvariablen Abschnitts beeinflusst. Der zweite volumenvariable Abschnitt arbeitet in entsprechender Weise wie der erste volumenvariable Abschnitt. Die beiden volumenvariablen Abschnitte unterscheiden sich jedoch darin, dass der zweite volumenvariable Abschnitt mit dem auslassseitigen Rohrabschnitt verbunden ist, der eine Auslassöffnung beinhaltet. Sobald der zweite volumenvariable Abschnitt also ein Pumpbewegung ausführt, wird schmelzflüssiges Glas aus der Auslassöffnung gepresst. Das Ausmaß der Pumpbewegung des zweiten volumenvariablen Abschnitts beeinflusst dabei die Menge des ausgestoßenen schmelzflüssigen Glases und damit die Größe des Glaspostens.

Weist die Portioniervorrichtung nur einen volumenvariablen Abschnitt auf, ist es bevorzugt, dass der einlassseitige und der auslassseitige Rohrabschnitt und der volumenvariable Abschnitt derart ausgebildet sind, dass das Innenvolumen des volumenvariablen Abschnitt durch eine Relativbewegung zwischen dem einlassseitigen Rohrabschnitt und dem auslassseitigen Rohrabschnitt steuerbar ist,
wobei eine Relativbewegung des einlassseitigen Rohrabschnitts und des auslassseitigen Rohrabschnitts aufeinander zu, eine Verkleinerung des Innenvolumens des volumenvariablen Abschnitts bewirkt, und
wobei eine Relativbewegung des einlassseitigen Rohrabschnitts und des auslassseitigen Rohrabschnitts voneinander weg, eine Vergrößerung des Innenvolumens des volumenvariablen Abschnitts bewirkt.

Weist die Portioniervorrichtung jedoch zwei volumenvariable Abschnitte auf, ist es bevorzugt, dass der einlassseitige und auslassseitige Rohrabschnitt unbeweglich angeordnet sind und der Zwischenrohrabschnitt derart ausgebildet ist, dass das Innenvolumen der volumenvariablen Abschnitte durch eine Relativbewegung des Zwischenrohrabschnitts zu dem einlassseitigen Rohrabschnitt und dem auslassseitigen Rohrabschnitt steuerbar ist,
wobei eine Relativbewegung des Zwischenrohrabschnitts zu dem einlassseitigen Rohrabschnitt eine Innenvolumenverkleinerung des ersten volumenvariablen Abschnitts und eine Innenvolumenvergrößerung des zweiten volumenvariablen Abschnitts bewirkt, und
wobei eine Relativbewegung des Zwischenrohrabschnitts zu dem auslassseitigen Rohrabschnitt eine Innenvolumenvergrößerung des ersten volumenvariablen Abschnitts und eine Innenvolumenverkleinerung des zweiten volumenvariablen Abschnitts bewirkt.

Gemäß einem zweiten Aspekt der vorliegenden Erfindung, wird die zugrunde liegende Aufgabe durch ein Portioniersystem für schmelzflüssiges Glas gelöst, das umfasst:
- ein Glasreservoir; und
- eine Portioniervorrichtung gemäß einer der oben beschriebenen Ausführungsformen, wobei die Portioniervorrichtung an dem Glasreservoir fixiert ist.

Vorzugsweise umfasst das Portioniersystem ferner ein Gehäuse, in welchem die Portioniervorrichtung angeordnet ist,
wobei durch eine einlassseitige Öffnung in dem Gehäuse der einlassseitige Rohrabschnitt geführt ist, und
wobei durch eine auslassseitige Öffnung in dem Gehäuse der auslassseitige Rohrabschnitt geführt ist, so dass die Auslassöffnung des auslassseitigen Rohrabschnitts außerhalb des Gehäuses angeordnet ist.

Weiterhin ist es bevorzugt, dass der einlassseitige Rohrabschnitt und der auslassseitige Rohrabschnitt an dem Gehäuse fixiert sind, wenn das Portioniersystem zwei volumenvariable Abschnitte umfasst. In diesem Fall bewegt sich bei einem Pumphub lediglich der Zwischenrohrabschnitt. Der einlassseitige und der auslassseitige Rohrabschnitt sind durch die Fixierung an dem Gehäuse unbeweglich.

Gemäß einem dritten Aspekt der vorliegenden Erfindung wird ein Verfahren zum Portionieren von schmelzflüssigem Glas bereitgestellt, welches die Schritte umfasst:
- Bereitstellen einer Portioniervorrichtung mit einem volumenvariablen Abschnitt gemäß einer der oben beschriebenen Ausführungsformen mit einem volumenvariablen Abschnitt;
- Einleiten des schmelzflüssigen Glas aus dem Glasreservoir in die Portioniervorrichtung;
- Ausführen einer Relativbewegung zwischen dem einlassseitigen und dem auslassseitigen Rohrabschnitt,
wobei eine Relativbewegung des einlassseitigen Rohrabschnitts und des auslassseitigen Rohrabschnitts aufeinander zu, eine Verkleinerung des Innenvolumens des volumenvariablen Abschnitts bewirkt, und
wobei eine Relativbewegung des einlassseitigen Rohrabschnitts und des auslassseitigen Rohrabschnitts voneinander weg, eine Vergrößerung des Innenvolumens des volumenvariablen Abschnitts bewirkt,
wobei die Innenvolumenvergrößerung des volumenvariablen Abschnitts eine Sogwirkung in der Portioniervorrichtung bewirkt, so dass schmelzflüssiges Glas aus dem Glasreservoir nachgezogen wird, und
wobei eine Innenvolumenverkleinerung des volumenvariablen Abschnitts bewirkt, dass eine vordefinierte Menge des schmelzflüssigen Glases aus der Auslassöffnung des auslassseitigen Rohrabschnitts austritt.

Die vordefinierte Menge des schmelzflüssigen Glases stellt hierbei den Glasposten bzw. Tropfen dar, der aus der Auslassöffnung austritt.

Vorzugsweise erfolgt die erzeugte Sogwirkung derart, dass ferner schmelzflüssiges Glas, das sich im Bereich des auslassseitigen Rohrabschnitts befindet, zumindest teilweise in Richtung des volumenvariablen Abschnitts zurückgezogen wird

Gemäß einem vierten Aspekt der vorliegenden Erfindung wird ein Verfahren zum Portionieren von schmelzflüssigem Glas bereitgestellt, welches die Schritte umfasst:
- Bereitstellen einer Portioniervorrichtung mit zwei beweglichen Rohrabschnitten gemäß einer der oben beschriebenen Ausführungsformen, wobei der auslassseitige und einlassseitige Rohrabschnitt unbeweglich angeordnet sind;
- Einleiten des schmelzflüssigen Glas aus dem Glasreservoir in die Portioniervorrichtung;
- Ausführen einer Relativbewegung des Zwischenrohrabschnitts in eine Richtung zu dem einlassseitigen Rohrabschnitts und dem auslassseitigen Rohrabschnitt,
wobei eine Relativbewegung des Zwischenrohrabschnitts zu dem einlassseitigen Rohrabschnitt eine Innenvolumenverkleinerung des ersten volumenvariablen Abschnitts und eine Innenvolumenvergrößerung des zweiten volumenvariablen Abschnitts bewirkt, und
wobei eine Relativbewegung des Zwischenrohrabschnitts zu dem auslassseitigen Rohrabschnitt eine Innenvolumenvergrößerung des ersten volumenvariablen Abschnitts und eine Innenvolumenverkleinerung des zweiten volumenvariablen Abschnitts bewirkt,
wobei eine Volumenvergrößerung eines volumenvariablen Abschnitts eine zumindest bereichsweise Sogwirkung in der Portioniervorrichtung bewirkt, so dass schmelzflüssiges Glas aus dem Glasreservoir in den ersten volumenvariablen Abschnitt und/oder schmelzflüssiges Glas, welches sich bereits in der Portioniervorrichtung befindet, in den zweiten volumenvariablen Abschnitt nachgezogen wird, und
wobei eine Volumenverkleinerung eines volumenvariablen Abschnitts eine zumindest bereichsweise Pumpwirkung in der Portioniervorrichtung bewirkt, so dass schmelzflüssiges Glases in eine Richtung zu der Auslassöffnung gepresst wird.

Entgegen der Portioniervorrichtung, in der nur ein volumenvariabler Abschnitt vorgesehen ist, sind in der Portioniervorrichtung mit zwei volumenvariablen Abschnitten der auslassseitige und der einlassseitige Rohrabschnitt fixiert und somit unbeweglich. Lediglich der Zwischenrohrabschnitt wird hin- und herbewegt. Vorzugsweise sind der einlassseitige und der auslassseitige Rohrabschnitt an einem Gehäuse befestigt, das die Portioniervorrichtung umgibt.

Es ist weiterhin denkbar, dass die volumenvariablen Abschnitte gleichzeitig die Innenvolumen vergrößern und/oder verkleinern, wodurch sich die Pumpleistung als auch die Sogwirkung verstärken würden.

Diese und andere Aufgaben, Merkmale und Vorteile der vorliegenden Erfindung werden aus dem Studium der folgenden detaillierten Beschreibung bevorzugter Ausführungsformen und der beiliegenden Zeichnungen deutlicher. Es ist ersichtlich, dass, obwohl Ausführungsformen separat beschrieben werden, einzelne Merkmale daraus zu zusätzlichen Ausführungsformen kombiniert werden können.
Fig. 1 zeigt eine schematische perspektivische Ansicht einer Portioniervorrichtung mit einem volumenvariablen Abschnitt in einem Zustand, in dem ein Glasposten aus der Auslassöffnung des auslassseitigen Rohrabschnitts austritt;
Fig. 2A zeigt eine Schnittansicht eines volumenvariablen Abschnitts in einem Zustand, in dem das Volumen vergrößert ist;
Fig. 2B zeigt eine Schnittansicht des volumenvariablen Abschnitts aus Fig. 2A in einem Zustand, in dem das Volumen verkleinert ist;
Fig. 3 zeigt eine Schnittansicht eines Portioniersystems, wobei die Portioniervorrichtung zwei volumenvariable Abschnitte aufweist;
Fig. 4 zeigt eine Folge von Schnittansichten des Portioniersystems aus Fig. 3 in verschiedenen Verfahrensstadien des Portionierverfahrens;
Fig. 5 zeigt eine Schnittansicht des Portioniersystems aus Fig. 3, wobei in dem Glasreservoir ein Plunger vorgesehen ist.

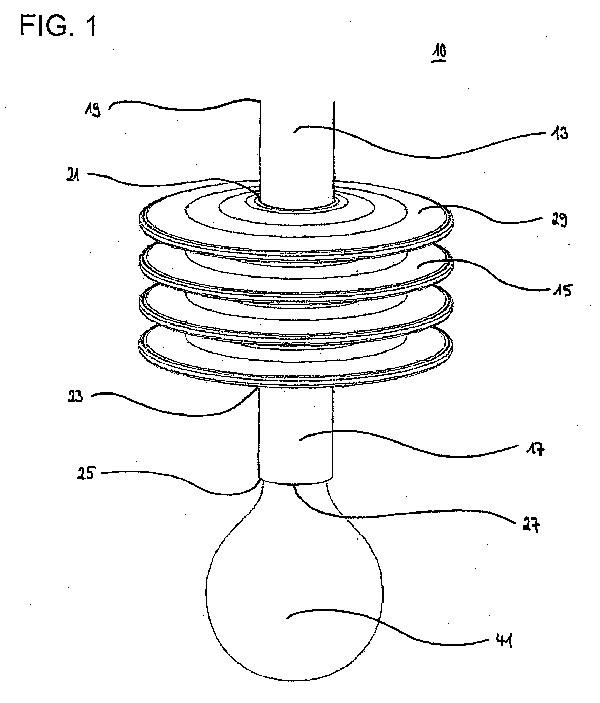

Die verschiedenen bevorzugten Ausführungsformen werden mit Bezug auf die Figuren 1 bis 5 im Folgenden beschrieben.

**Figur 1** zeigt eine schematische perspektivische Ansicht einer erfindungsgemäßen Portioniervorrichtung 10.

Die Portioniervorrichtung 10 weist einen einlassseitigen Rohrabschnitt 13, einen volumenvariablen Abschnitt 15 und einen auslassseitigen Rohrabschnitt 17 auf. Die einzelnen Rohrabschnitte 13, 17 und der volumenvariable Abschnitt 15 sind miteinander verbunden und bilden im verbundenen Zustand einen Durchflusskanal für schmelzflüssiges Glas. Erfindungsgemäß ist der volumenvariable Abschnitt 15 zwischen dem einlassseitigen Rohrabschnitt 13 und dem auslassseitigen Rohrabschnitt 17 anzuordnen. Sowohl der einlassseitige Rohrabschnitt 13 als auch der auslassseitige Rohrabschnitt 17 sind als Hohlkörper ausgebildet, der vorzugsweise die Form eines Zylinders aufweist. Der einlassseitige Rohrabschnitt 13 weist ein erstes Ende 19 auf, das an einem Glasreservoir 50 (hier nicht gezeigt) fixierbar ist, aus welchem die Portioniervorrichtung 10 mit schmelzflüssigem Glas gespeist wird. Ein zweites Ende 21 des einlassseitigen Rohrabschnitts 13 ist mit dem volumenvariablen Abschnitt 15 verbunden, der später näher beschrieben wird. Der auslassseitige Rohrabschnitt 17 ist an seinem ersten Ende 23 mit dem volumenvariablen Abschnitt 15 verbunden. Das zweite Ende 25 des auslassseitigen Rohrabschnitts 17 weist eine Auslassöffnung 27 für das schmelzflüssige Glas auf.

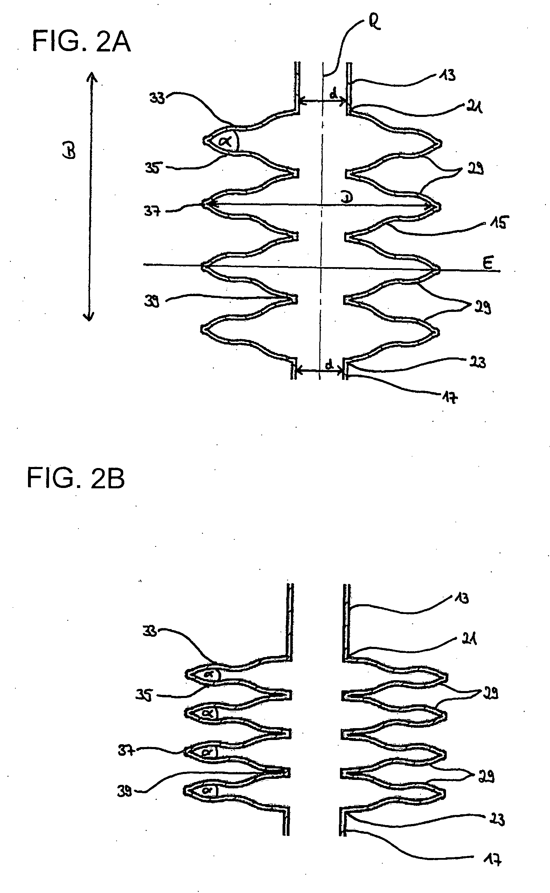

Im Gegensatz zu dem einlassseitigen und auslassseitigen Rohrabschnitt 13, 17, deren Volumina unveränderlich sind, weist der volumenvariable Abschnitt 15 eine Bauform auf, die es ihm erlaubt, sein Volumen zu verändern. Der volumenvariable Abschnitt 15 als ein Balg ausgeformt. Der Balg kann dabei aus einem Balgelement 29 oder mehreren Balgelementen 29 bestehen. Die in den Figuren 1, 2A und 2B gezeigte Ausführungsform des Balgs weist vier Balgelemente 29 auf, die miteinander verbunden sind. Ein Balgelement 29 weist vorzugsweise, wie in den Figuren 1, 2A und 2B gezeigt, eine Diskusform auf, wobei sich das diskusförmige Balgelement 29 rotationssymmetrisch um eine Rotationsachse R des einlassseitigen Rohrabschnitts 13 und/oder des auslassseitigen Rohrabschnitts 17 erstreckt. Das diskusförmige Balgelement 29 weist einen inneren Ausschnitt 31 auf, der einen Durchmesser aufweist, der dem Innendurchmesser d des einlassseitigen und/oder auslassseitigen Rohrabschnitts 13, 17 entspricht oder größer ist als zumindest einer der genannten Rohrabschnitte. Ferner wird die Diskusform des Balgelements 29 durch zwei rotationssymmetrische Flächen 33, 35 gebildet, die derart zueinander angeordnet sind, dass jeweilige äußere Enden 37 der rotationssymmetrischen Flächen 33, 35 miteinander verbunden sind und einen Winkel α zueinander bilden. Das innere Ende 39 einer rotationssymmetrischen Fläche 33, 35 ist entweder mit dem zweiten Ende 21 des einlassseitigen Rohrabschnitts 13, mit einem inneren Ende 39 eines angrenzenden zweiten Balgemements 29 oder mit dem ersten Ende 23 des auslassseitigen Rohrabschnitts 17 verbunden. Der Winkel α, der aus den rotationssymmetrischen Flächen 33, 35 gebildet wird, kann verändert werden, je nachdem ob ein verkleinertes oder ein vergrößertes Volumen des volumenvariablen Abschnitts gewünscht ist bzw. benötigt wird. Fig. 2A zeigt im Vergleich zu Fig. 2B einen größeren Winkel α. Somit ist das Innenvolumen innerhalb eines Balgelements 29 in der Fig. 2A größer als in Fig. 2B.

Der einlassseitige und auslassseitige Rohrabschnitt 13, 17 sowie der volumenvariable Abschnitt 15 sind vorzugsweise aus Platin oder einer Platinlegierung gefertigt. Die einzelnen Bauelemente des volumenvariablen Abschnitts 15 sowie der gesamten Portioniervorrichtung 10 werden vorzugsweise durch Schweißen miteinander verbunden. Die Wandstärke des einlassseitigen und auslassseitigen Rohrabschnitts 13, 17 sowie des volumenvariablen Abschnitts 15 beträgt vorzugsweise 0,2 bis 2 mm und am meisten bevorzugt 0,8 bis 1,2 mm. Bevorzugterweise haben alle Bauelemente der Portioniervorrichtung 10 eine einheitliche Wandstärke, es ist jedoch ebenfalls denkbar, dass die Wandstärken in den einzelnen Bauteilen voneinander abweichen. Der Innendurchmesser d des einlassseitigen und auslassseitigen Rohrabschnitts 13, 17 beträgt vorzugsweise zwischen 2 und 14 mm und am meisten bevorzugt zwischen 6 bis 8 mm, während der Innendurchmesser D des volumenvariablen Abschnitts 15 vorzugsweise zwischen 40 und 100 mm beträgt. Der Innendurchmesser D des volumenvariablen Abschnitts wird gemäß der vorliegenden Erfindung zwischen gegenüberliegenden Punkten an den Verbindungsstellen der rotationssymmetrischen Flächen 33, 35 eines Balgelements 29 gemessen.

Um eine verbesserte Flexibilität zu gewährleisten, nimmt der Abstand zwischen einer rotationssymmetrischen Fläche 33, 35 eines Balgelements 29 und einer Ebene E, die sich senkrecht zu der Rotationsachse R der einlassseitigen und auslassseitigen Rohrabschnitte 13, 17 erstreckt, von dem inneren Ende 39 einer rotationssymmetrischen Fläche 33, 35 zu dem äußeren Ende 37 einer rotationssymmetrischen Fläche 33, 35 nicht kontinuierlich ab. Die Ebene E verläuft dabei durch den Verbindungspunkt der rotationssymmetrischen Flächen 33, 35 eines Balgelements 29. Die sich daraus ergebende Flächenvergrößerung bietet eine höhere Flexibilität für das Balgelement.

Während des Portionierverfahrens von schmelzflüssigem Glas wird der auslassseitigen Rohrabschnitt 17 in einer Bewegungsrichtung B hin- und herbewegt, während der einlassseitige Rohrabschnitt fixiert ist. Die Bewegungsrichtung B erstreckt sich dabei in einer Richtung parallel zu der Rotationsachse R des einlassseitigen und auslassseitigen Rohrabschnitts 13, 17. Durch die Hin- und Herbewegung des auslassseitigen Rohrabschnitts 17 zu dem einlassseitigen Rohrabschnitt 13 und von dem einlassseitigen Rohrabschnitt 13 weg, was eine Relativbewegung zueinander darstellt, vergrößert sich oder verkleinert sich das Volumen des volumenvariablen Abschnitts 15.

Sobald schmelzflüssiges Glas aus dem Glasreservoir 50 in die Portioniervorrichtung 10 geflossen ist, beginnt die Relativbewegung bzw. Hin- und Herbewegung des auslassseitigen Rohrabschnitts 17. Wird der auslassseitige Rohrabschnitt 17 von dem einlassseitigen Rohrabschnitt 13 weg bewegt, vergrößert sich das Volumen des volumenvariablen Abschnitts 15, wie in Figur 2A gezeigt, und schmelzflüssiges Glas wird aus dem Glasreservoir 50 durch die erzeugte Sogwirkung in die Portioniervorrichtung 10 nachgezogen. Vorzugsweise erzielt die Sogwirkung ferner, dass schmelzflüssiges Glas, das sich im Bereich des auslassseitigen Rohrabschnitts 17 befindet, in Richtung zu dem volumenvariablen Abschnitt 15 zurückgezogen wird. Die Stärke des Nachziehens bzw. Rückzugs hängt dabei von dem Umfang der Volumenvergrößerung des volumenvariablen Abschnitts 15 ab. Sobald sich der auslassseitige Rohrabschnitt 17 wieder zu dem einlassseitigen Rohrabschnitt 13 bewegt, verkleinert sich das Volumen des volumenvariablen Abschnitts 15, wie in Figur 2B gezeigt. Die dadurch erzeugte Pumpwirkung drückt bzw. presst eine vordefinierte Menge des schmelzflüssigen Glas durch die Auslassöffnung 27. Die vordefinierte Menge des schmelzflüssigen Glas schnürt sich aufgrund seines Eigengewichts ab und wird anschließend entweder durch eine Trennschere oder aufgrund der wirkenden Schwerkraft von der Portioniervorrichtung 10 getrennt. Der abgetrennte Glasposten 41 kann dann einer weiterverarbeitenden Vorrichtung zugeführt werden.

Die Hin- und Herbewegung des auslassseitigen Rohrabschnitt 17 kann derart erfolgen, dass das Volumen des volumenvariablen Abschnitts 15 zwischen einem minimalen und einem maximal möglichen Volumen wechselt. Es ist jedoch auch möglich, dass durch die Bewegungen nicht das Minimum und Maximum des Volumens erreicht werden. Diese Variationsmöglichkeit bietet für den Benutzer den Vorteil, dass auf einfache Weise und ohne konstruktive Veränderungen die Glaspostengröße variiert werden kann. Es ist somit möglich, dass sowohl sehr kleine Glaspostengrößen als auch große Glaspostengrößen mit einer Vorrichtung produziert werden können. Lediglich die Stärke des Pumpstoßes, der durch die Volumenverkleinerung des volumenvariablen Abschnitts 15 hervorgerufen wir, beeinflusst die Größe des Glasposten 41. Es ist dabei nicht erforderlich, die Viskosität des schmelzflüssigen Glases zu erhöhen, wenn beispielsweise ein sehr kleiner Glasposten produziert werden soll. Stattdessen wird lediglich die Stärke des Pumpstoßes reduziert.

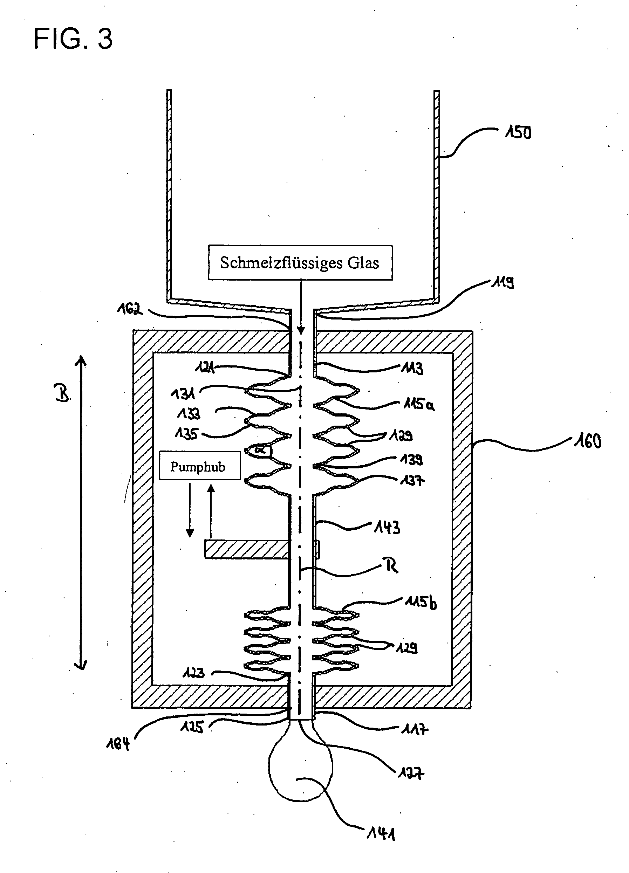

In Figur 3 wird eine weitere Ausführungsform einer Portioniervorrichtung 100 gezeigt. Im Vergleich zu der Portioniervorrichtung 10 der Figur 1, weist die Portioniervorrichtung 100 hier zwei volumenvariable Abschnitte 115a, 115b auf.

Im Speziellen weist die Portioniervorrichtung 100 einen ersten volumenvariablen Rohrabschnitt 115a und einen zweiten volumenvariablen Rohrabschnitt 115b auf, wobei die beiden volumenvariablen Abschnitte durch einen Zwischenrohrabschnitt 143 voneinander beabstandet sind. Der erste volumenvariable Abschnitt 115a ist mit dem einlassseitigen Rohrabschnitt 113 verbunden und der zweite volumenvariable Abschnitt 115b ist wiederum mit dem auslassseitigen Rohrabschnitt 117 verbunden. Die einzelnen Elemente sind vorzugsweise durch Schweißen miteinander verbunden und bilden zusammen einen Durchflusskanal. Der Zwischenrohrabschnitt 143 weist vorzugsweise eine Länge von 30 bis 60 mm und am meisten bevorzugt eine Länge von 40 bis 50 mm auf.

Weiterhin zeigt Figur 3 das Glasreservoir 150, an dem der einlassseitige Rohrabschnitt 113 fixiert ist und ein Gehäuse 160, das die Portioniervorrichtung 100 umgibt. Das Gehäuse 160 weist an seiner Oberseite eine einlassseitige Öffnung 162 auf, durch welche der einlassseitige Rohrabschnitt 113 hindurchgeführt wird, und an seiner Unterseite eine auslassseitige Öffnung 164, durch welche der auslassseitige Rohrabschnitt 117 hindurchgeführt wird. Die Auslassöffnung 127 des auslassseitigen Rohrabschnitts 117 liegt somit außerhalb des Gehäuses 160.

Im Gegensatz zu der Ausführungsform der Portioniervorrichtung 1 der Figur 1, sind in der vorliegenden Ausführungsform der einlassseitige und auslassseitige Rohrabschnitt 113, 117 unbeweglich. Vorzugsweise sind die beiden Rohrabschnitte hierzu an dem Gehäuse 160 befestigt. Während des Portionierverfahrens bewegen sich somit lediglich der Zwischenrohrabschnitt 143 hin und her bzw. führt eine Relativbewegung bezüglich des einlassseitigen und auslassseitigen Rohrabschnitts 113, 117 durch.

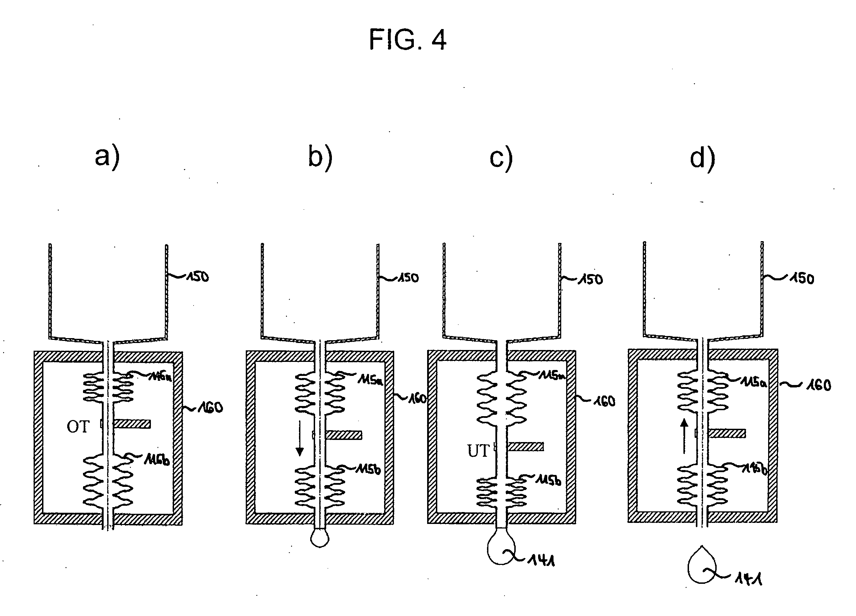

In Figur 4 wird beispielhaft ein Portionierverfahren mit zwei volumenvariablen Abschnitten 115a, 115b aufgezeigt.

In Figur 4a) befindet sich die Portioniervorrichtung 100 in einer Position, in der der erste volumenvariable Abschnitt 115a ein minimales Volumen aufweist, während der zweite volumenvariable Abschnitt 115b ein maximales Volumen aufweist. Eine derartige Position wird gemäß der vorliegenden Anmeldung als Oberer Totpunkt OT verstanden. Das schmelzflüssige Glas (hier nicht gezeigt), das aus dem Glasreservoir 150 in die Portioniervorrichtung 100 einströmt, fließt in diesem Zustand aufgrund der Schwerkraft von der Einlassseite zur Auslassseite, an der sich die Auslassöffnung 127 befindet.

In einem nächsten Schritt, wird der Zwischenrohrabschnitt 143 zu dem auslassseitigen Rohrabschnitt 117 bewegt, so dass sich das Volumen des ersten volumenvariablen Abschnitts 115a vergrößert, jedoch nicht sein Maximum erreicht (siehe Figur 4b)). Gleichzeitig verkleinert sich das Volumen des zweiten volumenvariablen Abschnitts 115b, jedoch nicht bis zu seinem Minimum. Durch die Verkleinerung des Volumens des zweiten volumenvariablen Abschnitts 115b beginnt die Pumpwirkung, so dass bereits ein Teil der Menge eines Glaspostens aus der Auslassöffnung 127 austritt. Die in dem ersten volumenvariablen Abschnitt 115a erzeugte Volumenvergrößerung bewirkt jedoch eine Sogwirkung, so dass schmelzflüssiges Glas aus dem Glasreservoir 150 nachgezogen wird. Vorzugsweise bewirkt die Sogwirkung ferner, dass schmelzflüssiges Glas, das sich im Bereich des Zwischenrohrabschnitts 143 befindet, zurückgezogen wird. Dies bietet die Möglichkeit, dass die Portionierung von Glasposten sehr präzise gestaltet werden kann, da bereits nachfließendes schmelzflüssiges Glas, das jedoch noch nicht zum Ausstoßen vorgesehen ist, kurz zurückgehalten wird, während schmelzflüssiges Glas, das sich bereits im Bereich der Auslassöffnung 127 befindet, ausgestoßen werden kann.

Sobald der Zwischenrohrabschnitt 143 noch weiter zu dem auslassseitigen Rohrabschnitt 117 bewegt wird, vergrößert sich das Volumen des ersten volumenvariablen Abschnitts 115a bis zu seinem Maximum, während sich das Volumen des zweiten volumenvariablen Abschnitts 115b bis zu seinem Minimum verkleinert (siehe Figur 4c)). Eine derartige Position wird gemäß der vorliegenden Anmeldung als Unterer Totpunkt UT verstanden. An dieser Stelle ist der Pumpstoß vollständig ausgeführt, so dass die gesamte vordefinierte Menge eines Glaspostens 141 aus der Auslassöffnung 127 ausgestoßen wird. Der Glasposten 141 wird anschließend durch eine Trennschere (hier nicht gezeigt) oder durch sein Eigengewicht von der Portioniervorrichtung 100 getrennt und einer weiterverarbeitenden Vorrichtung zugeführt.

Wie in Figur 4d) gezeigt, bewegt sich anschließend der Zwischenrohrabschnitt 143 wieder zurück in eine Richtung zu dem einlassseitigen Rohrabschnitt 113, wodurch das Volumen des ersten volumenvariablen Abschnitts 115a verkleinert wird, während sich das Volumen des zweiten volumenvariablen Abschnitts 115b wieder vergrößert. Die Volumenverkleinerung des ersten volumenvariablen Abschnitts 115a bewirkt dabei, dass schmelzflüssiges Glas in Richtung zu der Auslassöffnung 127 gepumpt wird, während die Volumenvergrößerung des zweiten volumenvariablen Abschnitts 115b bewirkt, dass eine Sogwirkung entsteht. Zu diesem Zeitpunkt tritt vorzugsweise kein schmelzflüssiges Glas aus der Auslassöffnung 127 aus.

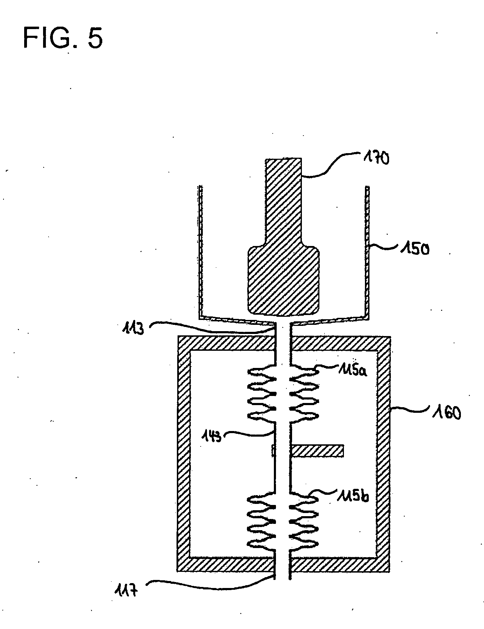

In einer weiteren Ausführungsform gemäß Figur 5, kann das Portioniersystem der Figur 3 und 4 noch weiter durch einen Plunger 170 verbessert werden, der in dem Glasreservoir 150 angeordnet ist. Der Plunger 170 kann in dem Portionierverfahren in der eingangs beschriebenen und aus dem Stand der Technik bekannten Weise bewegt werden oder derart in dem Glasreservoir angeordnet sein, dass sich ein vorbestimmter Abstand zwischen dem Plunger und dem Glasreservoirboden bildet. Das Vorsehen eines Plungers 170 in dem erfindungsgemäßen Portioniersystem ermöglicht es noch weiter, die Nachflussmenge sowie -geschwindigkeit des schmelzflüssigen Glas, das in die Portioniervorrichtung 100 einfliest, zu beeinflussen. Dadurch wird ein noch weiter verbessertes, sehr präzises Portionierverfahren bereitgestellt, das es ermöglicht auch sehr kleine Glasposten herzustellen, ohne die Weiterverarbeitbarkeit des Glaspostens negativ zu beeinflussen.

Bevorzugterweise können in allen Ausführungsformen, die einzelnen Rohrabschnitte, der/die volumenvariablen Abschnitt(e) und/oder das Glasreservoir beheizt werden. Eine Beheizung kann entweder induktiv mittels einer Widerstandsheizung oder mittels einer Strahlungsheizung erfolgen.

### Bezugszeichenliste

- 10, 100: Portioniervorrichtung
- 13, 113: einlassseitiger Rohrabschnitt
- 15: volumenvariabler Abschnitt
- 115a: erster volumenvariabler Abschnitt
- 115b: zweiter volumenvariabler Abschnitt
- 17, 117: auslassseitiger Rohrabschnitt
- 19, 119: erstes Ende des einlassseitigen Rohrabschnitts
- 21, 121: zweites Ende des einlassseitigen Rohrabschnitts
- 23, 123: erstes Ende des auslassseitigen Rohrabschnitts
- 25, 125: zweites Endes des auslassseitigen Rohrabschnitts
- 27, 127: Auslassöffnung
- 29, 129: Balgelement
- 31, 131: innerer Ausschnitt des volumenvariablen Abschnitts
- 33, 133: erste rotationssymmetrische Fläche des Balgelements
- 35, 135: zweite rotationssymmetrische Fläche des Balgelements
- 37, 137: äußeres Ende einer rotationssymmetrischen Fläche
- 39, 139: inneres Ende einer rotationssymmetrischen Fläche
- 41, 141: Glasposten
- 143: Zwischenrohrabschnitt
- 50, 150: Glasreservoir
- 160: Gehäuse
- 162: einlassseitige Öffnung des Gehäuses
- 164: auslassseitige Öffnung des Gehäuses
- 170: Plunger

- α: Winkel zwischen den rotationssymmetrischen Flächen eines Balgelements
- B: Bewegungsrichtung
- d: Innendurchmesser der einlassseitigen und auslassseitigen Rohrabschnitte
- D: Innendurchmesser des volumenvariablen Abschnitts
- E: Ebene
- R: Rotationsachse
- OT: Oberer Totpunkt
- UT: Unterer Totpunkt

## Patentansprüche

1. Portioniervorrichtung (10; 100) für schmelzflüssiges Glas umfassend:
- einen einlassseitigen Rohrabschnitt (13; 113), welcher an einem ersten Ende (19; 119) an einem Glasreservoir (50; 150) fixierbar ist, aus welchem die Portioniervorrichtung (10; 100) mit schmelzflüssigem Glas speisbar ist;
- zumindest einen volumenvariablen Abschnitt (15; 115a), welcher mit einem zweiten Ende (21; 121) des einlassseitigen Rohrabschnitts (13; 113) verbunden ist und dessen Innenvolumen variabel ist; und
- einen auslassseitigen Rohrabschnitt (17; 117), der an einem ersten Ende (23; 123) mit dem zumindest einen volumenvariablen Abschnitt (15; 115b) verbunden ist und an dessen zweitem Ende (25; 125) eine Auslassöffnung (27; 127) angeordnet ist, durch welche eine vordefinierte Menge des schmelzflüssigen Glases austreten kann,
**dadurch gekennzeichnet, dass**
der einlassseitige Rohrabschnitt (13; 113), der zumindest eine volumenvariable Abschnitt (15; 115a, 115b) und der auslassseitige Rohrabschnitt (17; 117) einen Durchflusskanal für das schmelzflüssige Glas ausbilden, und
der zumindest eine volumenvariable Abschnitt (15; 115a, 115b) ein Balg ist.

2. Portioniervorrichtung (10; 100) gemäß Anspruch 1, wobei der Balg aus zumindest einem diskusförmigen Balgelement (29; 129) besteht,
wobei sich das diskusförmige Balgelement (29; 129) rotationssymmetrisch um eine Rotationsachse (R) des einlassseitigen Rohrabschnitts (13; 113) und/oder des auslassseitigen Rohrabschnitts (17; 117) erstreckt.

3. Portioniervorrichtung (10; 100) gemäß Anspruch 2, wobei das diskusförmige Balgelement (29; 129) einen inneren Ausschnitt (31; 131) aufweist, der einen Durchmesser aufweist, der dem Innendurchmesser (d) des einlassseitigen und/oder auslassseitigen Rohrabschnitts (13, 17; 113, 117) entspricht, und die Diskusform des Balgemements (29; 129) durch zwei rotationssymmetrische Flächen (33, 35; 133, 135) gebildet wird, die derart zueinander angeordnet sind, dass jeweilige äußere Enden (37; 137) der rotationssymmetrischen Flächen (33, 35; 133, 135) miteinander verbunden sind und einen Winkel (α) zueinander bilden, und jeweilige innere Enden (39; 139) der rotationssymmetrischen Flächen (33, 35; 133, 135) mit dem zweiten Ende (21; 121) des einlassseitigen Rohrabschnitts (13; 113), mit einem inneren Ende (39; 139) eines angrenzenden zweiten Balgemements (29; 129) oder mit dem ersten Ende (23; 123) des auslassseitigen Rohrabschnitts (17; 117) verbunden sind.

4. Portioniervorrichtung (10; 100) gemäß Anspruch 3, wobei ein Abstand zwischen zumindest einer rotationssymmetrischen Fläche (33, 35; 133, 135) eines Balgelements (29; 129) und einer Ebene (E) senkrecht zu der Rotationsachse (R) des einlassseitigen und auslassseitigen Rohrabschnitts (13, 17; 113, 117) und des volumenvariablen Abschnitts (15; 115a, 115b) nicht kontinuierlich von dem inneren Ende (39; 139) der rotationssymmtrischen Fläche (33, 35; 133, 135) zu dem äußeren Ende (37; 137) der rotationssymmetrischen Fläche (33, 35; 133, 135) abnimmt, wobei die Ebene (E) senkrecht zu der Rotationsachse (R) einen Verbindungspunkt, an welchem die rotationssymmetrischen Flächen (33, 35; 133, 135) eines Balgelements (29; 129) miteinander verbunden sind, schneidet.

5. Portioniervorrichtung (10; 100) gemäß einem der vorangehenden Ansprüche, wobei die Portioniervorrichtung (10; 100) aus Platin oder einer Platinlegierung hergestellt ist.

6. Portioniervorrichtung (100) gemäß einem der vorangehenden Ansprüche, umfassend zwei volumenvariable Abschnitte (115a, 115b),
wobei der erste volumenvariable Abschnitt (115a) mit dem zweiten Ende (121) des einlassseitigen Rohrabschnitts (113) verbunden ist, die beiden volumenvariablen Abschnitte (115a, 115b) mittels eines Zwischenrohrabschnitts (143) verbunden sind, und der auslassseitige Rohrabschnitt (117) an seinem ersten Ende (123) mit dem zweiten volumenvariablen Abschnitt (115b) verbunden ist.

7. Portioniervorrichtung (1) gemäß einem der Ansprüche 1 bis 5,
wobei der einlassseitige und der auslassseitige Rohrabschnitt (13, 17) und der volumenvariable Abschnitt (15) derart ausgebildet sind, dass das Innenvolumen des volumenvariablen Abschnitts (15) durch eine Relativbewegung zwischen dem einlassseitigen Rohrabschnitt (13) und dem auslassseitigen Rohrabschnitt (17) steuerbar ist,
wobei eine Relativbewegung des einlassseitigen Rohrabschnitts (13) und des auslassseitigen Rohrabschnitts (17) aufeinander zu, eine Verkleinerung des Innenvolumens des volumenvariablen Abschnitts (15) bewirkt, und
wobei eine Relativbewegung des einlassseitigen Rohrabschnitts (13) und des auslassseitigen Rohrabschnitts (17) voneinander weg, eine Vergrößerung des Innenvolumens des volumenvariablen Abschnitts (15) bewirkt.

8. Portioniervorrichtung (100) gemäß Anspruch 6,
wobei der einlassseitige und auslassseitige Rohrabschnitt (113, 117) unbeweglich angeordnet sind und der Zwischenrohrabschnitt (143) derart ausgebildet ist, dass das Innenvolumen der volumenvariablen Abschnitte (115a, 115b) durch eine Relativbewegung des Zwischenrohrabschnitts (143) zu dem einlassseitigen Rohrabschnitt (113) und dem auslassseitigen Rohrabschnitt (117) steuerbar ist,
wobei eine Relativbewegung des Zwischenrohrabschnitts (143) zu dem einlassseitigen Rohrabschnitt (113) eine Innenvolumenverkleinerung des ersten volumenvariablen Abschnitts (115a) und eine Innenvolumenvergrößerung des zweiten volumenvariablen Abschnitts (115b) bewirkt, und
wobei eine Relativbewegung des Zwischenrohrabschnitts (143) zu dem auslassseitigen Rohrabschnitt (117) eine Innenvolumenvergrößerung des ersten volumenvariablen Abschnitts (115a) und eine Innenvolumenverkleinerung des zweiten volumenvariablen Abschnitts (115b) bewirkt.

9. Portioniersystem für schmelzflüssiges Glas, umfassend:
- ein Glasreservoir (50; 150); und
- eine Portioniervorrichtung (10; 100) gemäß einem der vorangehenden Ansprüche, wobei die Portioniervorrichtung (10; 100) an dem Glasreservoir (50; 150) fixiert ist.

10. Portioniersystem gemäß Anspruch 9, ferner umfassend ein Gehäuse (160), in welchem die Portioniervorrichtung (100) angeordnet ist,
wobei durch eine einlassseitige Öffnung (162) in dem Gehäuse (160) der einlassseitige Rohrabschnitt (113) geführt ist, und
wobei durch eine auslassseitige Öffnung (164) in dem Gehäuse (160) der auslassseitige Rohrabschnitt (117) geführt ist, so dass die Auslassöffnung (127) des auslassseitigen Rohrabschnitts (117) außerhalb des Gehäuses (160) angeordnet ist.

11. Portioniersystem gemäß Anspruch 10, wobei der einlassseitige Rohrabschnitt (113) und der auslassseitige Rohrabschnitt (117) an dem Gehäuse (160) fixiert sind, wenn das Portioniersystem zwei volumenvariable Abschnitte (115a, 115b) umfasst.

12. Verfahren zum Portionieren von schmelzflüssigem Glas umfassend die Schritte:
- Bereitstellen einer Portioniervorrichtung (10) mit einem volumenvariablen Abschnitt (15) gemäß einem der Ansprüche 1 bis 5 und 7;
- Einleiten des schmelzflüssigen Glas aus dem Glasreservoir (50) in die Portioniervorrichtung (10);
- Ausführen einer Relativbewegung zwischen dem einlassseitigen und dem auslassseitigen Rohrabschnitt (13, 17),
wobei eine Relativbewegung des einlassseitigen Rohrabschnitts (13) und des auslassseitigen Rohrabschnitts (17) aufeinander zu, eine Verkleinerung des Innenvolumens des volumenvariablen Abschnitts (15) bewirkt, und
wobei eine Relativbewegung des einlassseitigen Rohrabschnitts (13) und des auslassseitigen Rohrabschnitts (17) voneinander weg, eine Vergrößerung des Innenvolumens des volumenvariablen Abschnitts (15) bewirkt,
wobei die Innenvolumenvergrößerung des volumenvariablen Abschnitts (15) eine Sogwirkung in der Portioniervorrichtung (10) bewirkt, so dass schmelzflüssiges Glas aus dem Glasreservoir (50) nachgezogen wird, und
wobei eine Innenvolumenverkleinerung des volumenvariablen Abschnitts (15) bewirkt, dass eine vordefinierte Menge des schmelzflüssigen Glases aus der Auslassöffnung (27) des auslassseitigen Rohrabschnitts (17) austritt.

13. Verfahren nach Anspruch 12, wobei die erzeugte Sogwirkung derart erfolgt, dass ferner schmelzflüssiges Glas, das sich im Bereich des auslassseitigen Rohrabschnitts (17) befindet, zumindest teilweise in Richtung des volumenvariablen Abschnitts (15) zurückgezogen wird.

14. Verfahren zum Portionieren von schmelzflüssigem Glas umfassend die Schritte:
- Bereitstellen einer Portioniervorrichtung (100) mit zwei volumenvariablen Rohrabschnitten (115a, 115b) gemäß Anspruch 6 oder 8, wobei der auslassseitige und einlassseitige Rohrabschnitt (113, 117) unbeweglich angeordnet sind;
- Einleiten des schmelzflüssigen Glas aus dem Glasreservoir (150) in die Portioniervorrichtung (100);
- Ausführen einer Relativbewegung des Zwischenrohrabschnitts (143) in eine Richtung zu dem einlassseitigen Rohrabschnitt (113) und dem auslassseitigen Rohrabschnitt (117),
wobei eine Relativbewegung des Zwischenrohrabschnitts (143) zu dem einlassseitigen Rohrabschnitt (113) eine Innenvolumenverkleinerung des ersten volumenvariablen Abschnitts (115a) und eine Innenvolumenvergrößerung des zweiten volumenvariablen Abschnitts (115b) bewirkt, und
wobei eine Relativbewegung des Zwischenrohrabschnitts (143) zu dem auslassseitigen Rohrabschnitt (117) eine Innenvolumenvergrößerung des ersten volumenvariablen Abschnitts (115a) und eine Innenvolumenverkleinerung des zweiten volumenvariablen Abschnitts (115b) bewirkt,
wobei eine Volumenvergrößerung eines volumenvariablen Abschnitts (115a, 115b) eine zumindest bereichsweise Sogwirkung in der Portioniervorrichtung (100) bewirkt, so dass schmelzflüssiges Glas aus dem Glasreservoir (150) in den ersten volumenvariablen Abschnitt (115a) und/oder schmelzflüssiges Glas, welches sich bereits in der Portioniervorrichtung (100) befindet, in den zweiten volumenvariablen Abschnitt (115b) nachgezogen wird, und
wobei eine Volumenverkleinerung eines volumenvariablen Abschnitts (115a, 115b) eine zumindest bereichsweise Pumpwirkung in der Portioniervorrichtung (100) bewirkt, so dass schmelzflüssiges Glases in eine Richtung zu der Auslassöffnung (127) gepresst wird.

## Claims

1. A portioning device (10; 100) for molten glass, comprising:
- an inlet side pipe section (13; 113) fixable at a first end (19; 119) to a glass reservoir (50; 150) from which the portioning device (10; 100) is suppliable with molten glass;
- at least one volume variable section (15; 115a) connected to a second end (21; 121) of the inlet side pipe section (13; 113), and the internal volume thereof being variable; and
- an outlet side pipe section (17; 117) connected at a first end (23; 123) to the at least one volume variable section (15; 115b), and an outlet opening (27; 127) being arranged at the second end (25; 125) thereof, through which a predetermined amount of the molten glass can exit;
**characterized in that**
the inlet side pipe section (13; 113), the at least one volume variable section (15; 115a; 115b) and the outlet side pipe section (17; 117) form a flow channel for the molten glass, and
the at least one volume variable section (15; 115a; 115b) is a bellows.

2. The portioning device (10; 100) according to claim 1, wherein the bellows is composed of at least one disk-shaped bellows element (29; 129),
wherein the disk-shaped bellows element (29; 129) extends in a rotationally symmetrical manner about a rotational axis (R) of the inlet side pipe section (13; 113) and/or the outlet side pipe section (17; 117).

3. The portioning device (10; 100) according to claim 2, wherein the disk-shaped bellows element (29, 129) has an internal opening (31; 131) with a diameter corresponding to the inner diameter (d) of the inlet side and/or the outlet side pipe section (13; 17; 113; 117), and the disk shape of the bellows element (29; 129) is formed by two rotationally symmetrical surfaces (33; 35; 133; 135) which are arranged with respect to one another such that the respective outer ends (37; 137) of the rotational symmetrical surfaces (33; 35; 133; 135) are connected to each other and form an angle (α) with respect to each other, and respective inner ends (39; 139) of the rotationally symmetrical surfaces (33; 35; 133; 135) are connected to the second end (21; 121) of the inlet side pipe section (13; 113), to an inner end (39; 139) of an adjacent second bellows element (29; 129), or to the first end (23; 123) of the outlet side piping section (17; 117).

4. The portioning device (10; 100) according to claim 3, wherein a distance between at least one rotationally symmetrical surface (33; 35; 133; 135) of a bellows element (29; 129) and a plane (E) perpendicular to the rotational axis (R) of the inlet side and the outlet side pipe sections (13; 17; 113; 117) and the volume variable section (15; 115a; 115b) does not decrease continuously from the inner end (39; 139) of the rotationally symmetrical surface (33; 35; 133; 135) towards the outer end (37; 137) of the rotationally symmetrical surface (33; 35; 133; 135), wherein the plane (E) perpendicular to the rotational axis (R) intersects a connecting point where the rotationally symmetrical surfaces (33; 35; 133; 135) of a bellows element (29; 129) are connected to each other.

5. The portioning device (10; 100) according to any one of the preceding claims, wherein the portioning device (10; 100) is made of platinum or a platinum alloy.

6. The portioning device (100) according to any one of the preceding claims, comprising two volume variable sections (115a, 115b),
wherein the first volume variable section (115a) is connected to the second end (121) of the inlet side pipe section (113), the two volume variable sections (115a, 115b) are connected via an intermediate pipe section (143), and the outlet side pipe section (117), at the first end (123) thereof, is connected to the second volume variable section (115b).

7. The portioning device (1) according to any one of claims 1 to 5,
wherein the inlet side and the outlet side pipe sections (13; 17) and the volume variable section (15) are formed such that the internal volume of the volume variable section (15) is controllable by a relative movement between the inlet side pipe section (13) and the outlet side pipe section (17),
wherein a relative movement of the inlet side pipe section (13) and the outlet side pipe section (17) toward each other causes a decrease of the internal volume of the volume variable section (15), and
wherein a relative movement of the inlet side pipe section (13) and the outlet side pipe section (17) away from each other causes an increase of the internal volume of the volume variable section (15).

8. The portioning device (100) according to claim 6,
wherein the inlet side and the outlet side pipe sections (113; 117) are immovably arranged, and the intermediate pipe section (143) is formed such that the internal volume of the volume variable sections (115a, 115b) is controllable by a relative movement of the intermediate pipe section (143) with respect to the inlet side pipe section (113) and the outlet side pipe section (117),
wherein a relative movement of the intermediate pipe section (143) with respect to the inlet side pipe section (113) causes a decrease of the internal volume of the first volume variable section (115a) and an increase of the internal volume of the second volume variable section (115b), and
wherein a relative movement of the intermediate pipe section (143) with respect to the outlet side pipe section (117) causes an increase of the internal volume of the first volume variable section (115a) and a decrease of the internal volume of the second volume variable section (115b).

9. A portioning system for portioning molten glass, comprising:
- a glass reservoir (50, 150); and
- a portioning device (10; 100) according to any one of the preceding claims, wherein the portioning device (10; 100) is fixed to the glass reservoir (50; 150).

10. The portioning system according to claim 9, further comprising a housing (160) in which the portioning device (100) is accommodated,
wherein the inlet side pipe section (113) is guided through an inlet side opening (162) in the housing (160), and
wherein the outlet side pipe section (117) is guided through an outlet side opening (164) in the housing (160) such that the outlet opening (127) of the outlet side pipe section (117) is located outside the housing (160).

11. The portioning system according to claim 10, wherein the inlet side pipe section (113) and the outlet side pipe section (117) are fixed to the housing (160) when the portioning system comprises two volume variable sections (115a, 115b).

12. A method of portioning molten glass, comprising the steps of:
- providing a portioning device (10) having a volume variable section (15) according to any one of claims 1 to 5, and 7;
- feeding the molten glass from the glass reservoir (50) into the portioning device (10);
- carrying out a relative movement between the inlet side and the outlet side pipe sections (13, 17),
wherein a relative movement of the inlet side pipe section (13) and the outlet side pipe section (17) toward each other causes a decrease of the internal volume of the volume variable section (15), and
wherein a relative movement of the inlet side pipe section (13) and the outlet side pipe section (17) away from each other causes an increase of the internal volume of the volume variable section (15),
wherein the increase of the internal volume of the volume variable section (15) produces a suction effect in the portioning device such that molten glass is drawn from the glass reservoir (50), and
wherein a decrease of the internal volume of the volume variable section (15) causes a predetermined amount of the molten glass to exit from the outlet opening (27) of the outlet side pipe section (17).

13. The method according to claim 12, wherein the produced suction effect occurs such that molten glass present in the region of the outlet side pipe section (17) is further at least partially drawn back toward the volume variable section (15).

14. A method of portioning molten glass, comprising the steps of:
- providing a portioning device (100) having two volume variable sections (115a, 115b) according to claim 6 or 8 , wherein the outlet side and the inlet side pipe sections (113, 117) are immovably arranged;
- feeding the molten glass from the glass reservoir (150) into the portioning device (100);
- carrying out a relative movement of the intermediate pipe section (143) toward the inlet side pipe section (113) and the outlet side pipe section (117),
wherein a relative movement of the intermediate pipe section (143) with respect to the inlet side pipe section (113) causes a decrease of the internal volume of the first volume variable section (115a) and an increase of the internal volume of the second volume variable section (115b), and
wherein a relative movement of the intermediate pipe section (143) with respect to the outlet side pipe section (117) causes an increase of the internal volume of the first volume variable section (115a) and a decrease of the internal volume of the second volume variable section (115b),
wherein an increase of the volume of a volume variable section (115a, 115b) causes an at least regional suction effect in the portioning device such that molten glass is drawn from the glass reservoir (150) into the first volume variable section (115a), and/or molten glass already present in the portioning device (100) is drawn into the second volume variable section (115b), and
wherein a decrease of the volume of a volume variable section (115a, 115b) causes an at least regional pumping effect in the portioning device (100) such that molten glass is pressed toward the outlet opening (127).

## Revendications

1. Dispositif de partitionnement (10 ; 100) pour du verre en fusion comprenant :
- une section tubulaire côté entrée (13 ; 113) qui peut être fixée à une première extrémité (19; 119) à un réservoir de verre (50 ; 150) duquel le dispositif de partitionnement (10 ; 110) peut être alimenté en verre en fusion ;
- au moins une section à volume variable (15 ; 115a) qui est reliée à une seconde extrémité (21 ; 121) de la section tubulaire côté entrée (13. 113) et dont le volume interne est variable ; et
- une section tubulaire côté sortie (17 ; 117) qui est reliée à une première extrémité (23 ; 123) à l'au moins une section à volume variable (15 ; 115b) et une ouverture de sortie (27 ; 127) à travers laquelle une quantité prédéfinie du verre en fusion peut sortir est disposée à sa seconde extrémité (25 ; 125), **caractérisé en ce que**
la section tubulaire côté entrée (13 ; 113), l'au moins une section à volume variable (15 ; 115a, 115b) et la section tubulaire côté sortie (17 ; 117) forment un canal d'écoulement pour le verre en fusion, et
l'au moins une section à volume variable (15 ; 115a, 115b) est un soufflet.

2. Dispositif de partitionnement (10 ; 100) selon la revendication 1, dans lequel le soufflet se compose d'au moins un élément de soufflet en forme de disque (29 ; 129),
dans lequel l'élément de soufflet en forme de disque (29 ; 129) s'étend à symétrie de rotation autour d'un axe de rotation (R) de la section tubulaire côté entrée (13 ; 113) et/ou de la section tubulaire côté sortie (17 ; 117).

3. Dispositif de partitionnement (10 ; 100) selon la revendication 2, dans lequel l'élément de soufflet en forme de disque (29 ; 129) présente une découpe interne (31 ; 131) qui présente un diamètre qui correspond au diamètre interne (d) de la section tubulaire côté entrée et/ou côté sortie (13, 17 ; 113, 117), et la forme de disque de l'élément de soufflet (29 ; 129) est formée par deux faces à symétrie de rotation (33, 35 ; 133, 135) qui sont disposées l'une par rapport à l'autre de telle sorte que des extrémités externes respectives (37 ; 137) des faces à symétrie de rotation (33, 35; 133, 135) sont reliées ensemble et forment un angle (α) l'une par rapport à l'autre, et des extrémités internes respectives (39 ; 139) des faces à symétrie de rotation (33, 35 ; 133, 135) sont reliées à la seconde extrémité (21 ; 121) de la section tubulaire côté entrée (13 ; 113), à une extrémité interne (39 ; 139) d'un second élément de soufflet adjacent (29 ; 129) ou à la première extrémité (23 ; 123) de la section tubulaire côté sortie (17 ; 117).

4. Dispositif de partitionnement (10 ; 100) selon la revendication 3, dans lequel un écart entre au moins une face à symétrie de rotation (33, 35 ; 133, 135) d'un élément de soufflet (29 ; 129) et un plan (E) perpendiculaire à l'axe de rotation (R) de la section tubulaire côté entrée et côté sortie (13, 17 ; 113, 117) et de la section à volume variable (15 ; 115a, 115b) ne décroît pas de manière continue de l'extrémité interne (39 ; 139) de la face à symétrie de rotation (33, 35 ; 133, 135) à l'extrémité externe (37 ; 137) de la face à symétrie de rotation (33, 35 ; 133, 135), dans lequel le plan (E) perpendiculaire à l'axe de rotation (R) coupe un point de connexion au niveau duquel les faces à symétrie de rotation (33, 35 ; 133, 135) d'un élément de soufflet (29 ; 129) sont reliées ensemble.

5. Dispositif de partitionnement (10; 100) selon une des revendications précédentes, dans lequel le dispositif de partitionnement (10 ; 100) est fabriqué en platine ou un alliage de platine.

6. Dispositif de partitionnement (100) selon une des revendications précédentes, comprenant deux sections à volume variable (115a, 115b),
dans lequel la première section à volume variable (115a) est reliée à la seconde extrémité (121) de la section tubulaire côté entrée (113), les deux sections à volume variable (115a, 115b) sont reliées au moyen d'une section tubulaire intermédiaire (143) et la section tubulaire côté sortie (117) est reliée à sa première extrémité (123) à la seconde section à volume variable (115b).

7. Dispositif de partitionnement (1) selon une des revendications 1 à 5,
dans lequel la section tubulaire côté entrée et la section tubulaire côté sortie (13, 17) et la section à volume variable (15) sont réalisées de telle sorte que le volume interne de la section à volume variable (15) peut être commandé par un mouvement relatif entre la section tubulaire côté entrée (13) et la section tubulaire côté sortie (17),
dans lequel un mouvement relatif de la section tubulaire côté entrée (13) et de la section tubulaire côté sortie (17) l'une vers l'autre entraîne un rétrécissement du volume interne de la section à volume variable (15), et
dans lequel un mouvement relatif de la section tubulaire côté entrée (13) et de la section tubulaire côté sortie (17) l'une à l'écart de l'autre entraîne un agrandissement du volume interne de la section à volume variable (15).

8. Dispositif de partitionnement (100) selon la revendication 6,
dans lequel les sections tubulaires côté entrée et côté sortie (113, 117) sont disposées de manière immobile et la section tubulaire intermédiaire (143) est réalisée de telle sorte que le volume interne des sections à volume variable (115a, 115b) peut être commandé par un mouvement relatif de la section tubulaire intermédiaire (143) vers la section tubulaire côté entrée (113) et la section tubulaire côté sortie (117),
dans lequel un mouvement relatif de la section tubulaire intermédiaire (143) vers la section tubulaire côté entrée (113) entraîne un rétrécissement de volume interne de la première section à volume variable (115a) et un agrandissement de volume interne de la seconde section à volume variable (115b), et
dans lequel un mouvement relatif de la section tubulaire intermédiaire (143) vers la section tubulaire côté sortie (117) entraîne un agrandissement de volume interne de la première section à volume variable (115a) et un rétrécissement de volume interne de la seconde section à volume variable (115b).

9. Système de partitionnement pour du verre en fusion comprenant :
- un réservoir de verre (50 ; 150) ; et
- un dispositif de partitionnement (10 ; 100) selon une des revendications précédentes, dans lequel le dispositif de partitionnement (10 ; 100) est fixé au réservoir de verre (50 ; 150).

10. Système de partitionnement selon la revendication 9, comprenant en outre un logement (160) dans lequel le dispositif de partitionnement (100) est disposé, dans lequel la section tubulaire côté entrée (113) est guidée à travers une ouverture côté entrée (162) dans le logement (160), et
dans lequel la section tubulaire côté sortie (117) est guidée à travers une ouverture côté sortie (164) dans le logement (160) de sorte que l'ouverture de sortie (127) de la section tubulaire côté sortie (117) est disposée en dehors du logement (160).

11. Système de partitionnement selon la revendication 10, dans lequel la section tubulaire côté entrée (113) et la section tubulaire côté sortie (117) sont fixées au logement (160) lorsque le système de partitionnement comprend deux sections à volume variable (115a, 115b).

12. Procédé de partitionnement de verre en fusion comprenant les étapes :
- mise à disposition d'un dispositif de partitionnement (10) avec une section à volume variable (15) selon une des revendications 1 à 5 et 7 ;
- introduction du verre en fusion du réservoir de verre (50) dans le dispositif de partitionnement (10) ;
- réalisation d'un mouvement relatif entre la section tubulaire côté entrée et la section tubulaire côté sortie (13, 17),
dans lequel un mouvement relatif de la section tubulaire côté entrée (13) et de la section tubulaire côté sortie (17) l'une vers l'autre entraîne un rétrécissement du volume interne de la section à volume variable (15), et
dans lequel un mouvement relatif de la section tubulaire côté entrée (13) et de la section tubulaire côté sortie (17) l'une à l'écart de l'autre entraîne un agrandissement du volume interne de la section à volume variable (15),
dans lequel l'agrandissement de volume interne de la section à volume variable (15) entraîne un effet d'aspiration dans le dispositif de partitionnement (10) de sorte que du verre en fusion est retiré du réservoir de verre (50), et
dans lequel un rétrécissement de volume interne de la section à volume variable (15) entraîne qu'une quantité prédéfinie du verre en fusion sort de l'ouverture de sortie (27) de la section tubulaire côté sortie (17).

13. Procédé selon la revendication 12, dans lequel l'effet d'aspiration généré s'effectue de telle sorte que du verre en fusion qui se trouve dans la région de la section tubulaire côté sortie (17) est en outre au moins partiellement rétracté en direction de la section à volume variable (15).

14. Procédé de partitionnement de verre en fusion comprenant les étapes :
- mise à disposition d'un dispositif de partitionnement (100) avec deux sections à volume variable (115a, 115b) selon la revendication 6 ou 8, dans lequel les sections tubulaires côté sortie et côté entrée (113, 117) sont disposées de manière immobile ;
- introduction du verre en fusion du réservoir de verre (150) dans le dispositif de partitionnement (100) ;
- réalisation d'un mouvement relatif de la section tubulaire intermédiaire (143) dans une direction vers la section tubulaire côté entrée (113) et la section tubulaire côté sortie (117),
dans lequel un mouvement relatif de la section tubulaire intermédiaire (143) vers la section tubulaire côté entrée (113) entraîne un rétrécissement de volume interne de la première section à volume variable (115a) et un agrandissement de volume interne de la seconde section à volume variable (115b), et
dans lequel un mouvement relatif de la section tubulaire intermédiaire (143) vers la section tubulaire côté sortie (117) entraîne un agrandissement de volume interne de la première section à volume variable (115a) et un rétrécissement de volume interne de la seconde section à volume variable (115b),
dans lequel un agrandissement de volume d'une section à volume variable (115a, 115b) entraîne un effet d'aspiration au moins par région dans le dispositif de partitionnement (100) de sorte que du verre en fusion est retiré du réservoir de verre (150) dans la première section à volume variable (115a) et/ou du verre en fusion qui se trouve déjà dans le dispositif de partitionnement (100) est retiré dans la seconde section à volume variable (115b), et
dans lequel un rétrécissement de volume d'une section à volume variable (115a, 115b) entraîne un effet de pompe au moins par région dans le dispositif de partitionnement (100) de sorte que du verre en fusion est pressé dans une direction vers l'ouverture de sortie (127).
